(19) Europäisches Patentamt
European Patent Office
Office européen des brevets

(11) **EP 3 024 176 A1**

(12) **EUROPEAN PATENT APPLICATION**

(43) Date of publication:
**25.05.2016 Bulletin 2016/21**

(51) Int Cl.:
*H04L 12/24* (2006.01)  *H04L 12/26* (2006.01)

(21) Application number: **14306855.9**

(22) Date of filing: **21.11.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Dupuis, Nicolas**
  **6041 Gosselies (BE)**
• **Dardenne, Xavier**
  **6041 Gosselies (BE)**

(74) Representative: **ALU Antw Patent Attorneys**
**Intellectual Property and Standards**
**Copernicuslaan 50**
**2018 Antwerp (BE)**

(54) **Method for assessing a quality of service of a data communication over a data communications line, a related system and devices**

(57)    The present invention relates to a method, system and related devices for assessing the Quality of Service of a data communication over a data communications line, said data communications line coupling a Network access Node and a customer premises equipment (Fig. 1), said method including the application of retransmission technology for correcting errors of said data communication, said method comprising the steps of collecting, for said data communications line, physical error free throughput information and estimating for said data communications line a minimum error-free physical line throughput and subsequently generating a Quality of service classification of said data communications line based on said minimum error-free physical line throughput & applying it to Dynamic Line Management.

FIG. 1

**Description**

FIELD OF THE INVENTION

The present invention, relates to the performance monitoring of an access network including Digital Subscriber Line (DSL) connections and in particular, but not exclusively relates to assessing a quality of service of a data communication over a data communications line.

TECHNICAL BACKGROUND OF THE INVENTION

With the increasing deployment of IPTV solutions, Video-On-Demand offers or Triple-play services, both the system performances and the customer support becomes more and more exigent, particularly on Digital Subscriber Lines (DSL).

Disturbances or impairments on a digital subscriber line may heavily impact the bit rate on a physical access link provided by the digital subscriber line. A decrease of the bit rate would adversely impact the quality of service of the above-mentioned high bit rate services. Hence, it is of prime importance to be able to remotely diagnose reasons of the disturbances and impairments and take actions to improve the performance of the link, in particular to increase the bit rate. Automatically evaluating the performance of digital subscriber lines and taking action to resolve problems on the physical links provided by these lines is also referred to as Dynamic Line Management (DLM). Applying dynamic line management on a wireline access network helps the operators of the network to gain in service quality as well as to save money and time by not involving human inventions for each and every type of request that may occur in case of disturbances and impairments in the wire line access network.

Moreover, recent technology evolutions in wireline access networks tend to push the bandwidth of the signal used on the digital subscriber lines higher. Major ADSLx technology use frequencies up to about 1.1 MHz. However, the current VDSL2 technology can be applied with bandwidths up to 17 MHz or even 30 MHz.

Besides increasing the signal bandwidth, additional measures have been implemented in order to increase the bit rate of digital subscriber lines. As a consequence, digital subscriber lines have become more sensible to disturbances and impairments and more advanced solutions for dynamic line management are needed.

Basically, dynamic line management monitors at least one parameter describing a physical characteristic of one or more digital subscriber lines and thereby dynamically accesses and monitors the stability of the line. A line is considered stable if transmission at a certain bit rate can be maintained during a sufficiently long time interval. Otherwise, the line is considered as unstable. Unstable lines typically have an unacceptable high rate of resynchronisations or an unacceptable high rate of coding violations or other transmission errors. If dynamic line management detects that a certain line is unstable, the maximum bit rate of that line may be reduced in order to stabilize that line.

When monitoring and assessing the stability of a line, the quality of service (e. g. the bit rate under the stability assumption) should be improved and any unneeded decrease of the quality of service seen by the end user should be avoided. In particular, dynamic line management should not operate too conservatively and classify a line as unstable although the user does not feel any practical impacts on the quality of service, because a stabilisation action would typically reduce the bit rate or the latency of the line.

To assess the Quality of Experience or Quality of Service QoE/QoS of a line, for instance to establish whether a line is *stable or not,* metrics and associated thresholds have been defined. Exemplary known metrics are the *Mean Time Between Errors* (MTBE) and the Mean *Time Between Resynchronizations* (MTBR).

The *Mean Time Between Errors* MTBE describes a mean time during which a line has to wait before the transmission on that line is degraded by corrupted symbols, i.e. by physical layer symbols containing errors that may be caused by impulse noise or other disturbances.

The mean time between *Resynchronizations* MTBR describes a mean time before the modems of the customer premises equipment (CPE) and an access node of the network (e.g. a DSLAM) resynchronise spontaneously because of a weak quality of the link.

Any issue impacting the line in terms of corrupted symbols and therefore negatively affecting or lowering the MTBE can be solved by resorting to Impulse Noise Protection (INP) mechanisms, such as the classical IFEC (Forward Error Correction and Interleaver) mechanism or the latest G.INP, which is also called error correction by Retransmission technology, i.e. a mechanism enabling retransmission of corrupted data frames directly at the physical-layer level. With this technology, most of the corrupted data gets retransmitted, eventually resulting in fewer Code Violations (CV), Errored Seconds (ES) or Severely Errored Seconds (SES) as the retransmitted symbols are usually healthy. Apparently, the Quality of Service seems therefore enhanced as these error events occur much less numerous.

However, this, potentially high amount of, retransmissions consume a part of the available bitrate and therefore, in the context of G.INP, the error-free throughput i.e. the useful bitrate may be significantly reduced, with possible impacting consequences on the sustainability of services like video streams (IPTV, VOD, video-over-the-top, etc). Hence the current assessment of the Quality of Service seems to hide the real Quality of Service situation in view of the retransmission of corrupted frames.

SUMMARY OF THE INVENTION

An objective of embodiments of the present invention is to provide with a method and related devices for assessment of the Quality of Service of a data communication over a data communications line of the above known type but wherein the assessment of the Quality of Service provides with a better indication of the real Quality of Service situation.

According to an embodiment of the present invention a method for assessing a Quality of Service of a data communication over a data communications line is provided, the method comprising the steps of collecting, for said data communications line, physical error free throughput information and assessing or estimating for said data communications line a minimum error-free physical line throughput and generating a Quality of service classification of said data communications line based on said minimum error-free physical line throughput.

In this way by first collecting, for the meant data communications line, physical error free throughput information and subsequently estimating for this data communications line a minimum error-free physical line throughput which step is followed by generating a Quality of service classification or alternatively a Quality of Experience classification of the data communications line based on said minimum error-free physical line throughput, this classification may be provide with an improved indication of the real Quality of Service situation.

The collecting of the physical line data, i.e. the minimum error-free physical line throughput may comprise retrieving the physical line data from at least one network element where the physical line data is collected.

Typically this network element is a node that is directly connected to the subscriber line, such as an access node or a DSL modem. In some embodiments, the physical line data optionally may be collected from multiple network elements, e.g. multiple access nodes, of an access network.

The minimum error-free physical line throughput first provides an indication of the lowest error free throughput EFTR over the data communications line observed over a given period of time. By regularly collecting this counter, it is possible to estimate the amplitude of the worst bitrate drops, as well as their frequency of occurrence.

Subsequently, by making an estimate for the minimum error-free physical line throughput on a daily basis where the minimum error-free physical line throughput may comprise a single value for an entire day but alternatively may comprise a plurality of values, where each value corresponds to a time interval of one or more time intervals.

Finally, each minimum error-free physical line throughput value of either the single value or this plurality of values is applied for generating a Quality of service or Quality of Experience classification by comparing each said value with at least one threshold value based upon which a classification for the respective value is decided. Based on the outcome of the comparison, the time interval that is associated with the value is assigned a classification.

Such threshold value based upon which the classification is done may be defined based on the minimum bandwidth required for transmitting data over the data communications line towards a customer premise equipment without impacting the quality of experience of a user of such customer premises equipment.

Each time interval of the at least one time interval with its corresponding minimum error-free physical line throughput value is assigned a classification, e.g. either the classification Good, Risky or Bad.

The meaning of "Good" for a certain time interval is that the minimum error-free physical line throughput value is more than sufficient for transmitting a certain type of data (e.g. High speed Internet, Video etc.) without introducing errors in the transmission (at the upper-layers of protocols).

The meaning of "Risky" for a certain time interval is that the minimum error-free physical line throughput value is possibly, especially in case of potential errors, not sufficient for transmitting a certain type of data (e.g. High speed Internet, Video etc.) without introducing errors in the transmission.

The meaning of "Bad" for a certain time interval is that the minimum error-free physical line throughput value is not sufficient for transmitting a certain type of data (e.g. High speed Internet, Video etc.) without introducing errors in the transmission

The Quality of Service classification (e.g. Good, Risky or Bad) corresponds to each time interval with its associated minimum error-free physical line throughput value.

The Quality of service (QoS) is the overall performance of a telephony or computer network, particularly the performance seen by the users of the network.

Quality of experience (QoE) is a measure for the total system performance using subjective and objective measures of customer satisfaction. It differs from quality of service (QoS), which assesses the performance of hardware and software services delivered by a vendor under the terms of a contract.

With Quality of Service QoS, also the Quality of Experience QoE of the subject data communications line may be implied where the quality of experience may be a measure for the quality of the data communications line as perceived by a user of the subject data communications line.

This classification of the data communications line based on said minimum error-free physical line throughput is based on a metric, i.e. minimum error-free physical line throughput min EFTR, that is better suited to quantify the real Quality of Service or the real Quality of Experience of the data communication over the data communications line in the presence of application of retransmission technology for retransmission of corrupted frames directly at the physical layer, such as G.INP.

Moreover, this new metric can be used as a much more suitable input for a Dynamic Line Management for physical line troubleshooting and optimization of such physical data line compared to the earlier mentioned currently used QoS metrics, i.e. "classical" MTBE and MTBR physical line parameters.

The purpose of this solution is then to offer a method enabling the detection of these error-free throughput EFTR drops, as well as an assessment of their impact on the service. Also, a daily Quality of service or Quality of experience metric, that summarizes this impact is proposed, that can be applied for physical data line troubleshooting and optimization.

The minimum error-free physical line throughput first provides an indication of the lowest EFTR observed over a given period of time. By regularly collecting this counter, it is possible to estimate the amplitude of the worst bitrate drops, as well as their frequency of occurrence, potentially inferring on their impact on the global QoS or QoE of the data communication.

Moreover, this resulting classification of the data communications line based on said minimum error-free physical line throughput may be applicable for presentation at a certain Graphical user interface at an operator site or alternatively at home by means of the Customer premises equipment CPE to provide such an operator or user with an improved view on the Quality of service of the data communications line.

In a further embodiment, the method of the present invention further comprises, generating said Quality of Service classification of said data communications line additionally based on additional physical data communications line parameters.

The generating of the Quality of service classification or alternatively a Quality of Experience classification of the data communications line additionally, i.e. in addition to the classification based on the minimum error-free physical line throughput, may be based on additional physical data communications line parameters such as for example the *instantaneous EFTR* values.

The new metric, based on the minimum error-free physical line throughput can be applied in combination with the MTBE and MTBR to provide a more accurate view of the real Quality of Service as perceived by end users.

Moreover, this metric can be applied to control even more appropriate actions in Dynamic Line Management system for physical data line troubleshooting and optimization of the physical data line especially if a retransmission application for error correction in case of corrupted frames or cells is applied.

Another embodiment of the method of the present invention relates to a method for assessing a Quality of Service of a data communication according to claim 1 or 2, wherein said step of estimating said minimum error-free physical line throughput is based on a single value of said minimum error-free physical line throughput on a daily basis, i.e. in a 24 hours time frame.

The step of estimating said minimum error-free physical line throughput is based on a single value of said minimum error-free physical line throughput in a 24 hours time frame.

This single value of the minimum error-free physical line throughput, where this value being collected at an arbitrary moment of time on the day, which value is applied as representing the status of the communications line for the entire full day is applied is for classifying the Quality of service of the data communication for that day.

The minimum Error-Free Throughput observed over the entire previous day can be retrieved and compared to some pre-defined thresholds on a daily basis. This approach provides a view on the amplitude of the worst bitrate drop over the relevant day.

Another embodiment of the method of the present invention relates to a method for assessing a Quality of Service of a data communication according to claim 1 or 2, wherein said step of estimating said minimum error-free physical line throughput is based on a value of said minimum error-free physical line throughput for each interval of a plurality of time intervals in a 24 hours time frame.

The step of estimating the minimum error-free physical line throughput may be based on a value of said minimum error-free physical line throughput for each interval of a plurality of time intervals in a 24 hours time frame. Such time interval for instance may have a duration of 15 minutes or even have a duration of one minute, or 1 second. The duration of the interval, or the frequency of samples for the minimum error-free physical line throughput value, determines the accuracy of the estimated Quality of Service. In case of a higher frequency of samples of the minimum error-free physical line throughput value a more accurate estimate can be made on the amplitude of the worst bit rate drop over a relevant day but in addition also on the frequency of the bit rate drop over the relevant day.

For instance, every 15-min, a new minimum Error-Free Throughput value is made available, e.g. by a network access node, whereafter such value may be compared to a threshold value. This allows proposing a view over time on the occurrence and severity of the loss of Error-Free Throughput.

A further embodiment of the method of the present invention relates to a method for assessing a Quality of Service of a data communication according to claim 4, wherein said Quality of service classification of said data communications line is generated by comparing for each time interval of said plurality of time intervals, a minimum error-free physical line throughput value with at least one predefined threshold value; and assigning based on said comparing a class to each said interval wherein said classification of said data wherein said classification of said data communications line comprises a plurality of classes.

The Quality of Service classification of said data communications line is generated by comparing for each time interval of the plurality of time intervals, a minimum error-free physical line throughput value with at least one predefined threshold value. By comparing a minimum error-free physical line throughput value for each time interval with at least one threshold such value is classified in a class of a plurality of possible classes, where each class may be a quantification of the Quality of service of the data communications line. Such classification of the data communications line may comprise a plurality of classes where each class is quantification of a state of Quality of service of the subject data communications line. The entire possible Quality of service, classification may be subdivided into a plurality states of the subject data communications line, e.g. GOOD or BAD, or GOOD, RISKY or BAD or a further alternative classification.

This respectively refers to the plurality of classes consisting of only two classes, e.g. the class of stable lines and the class of unstable lines or alternatively if the plurality of stability classes corresponds to three classes: a class of stable lines, a class of risky lines and a class of unstable lines. Within "unstable", we talk about modem stability issues but also QoS degradation issues (quality of the PHY data transmission).

With Quality of Service QoS, also the Quality of Experience QoE of the subject data communications line may be implied where the quality of experience may be a measure the quality of the data communications line perceived by a user of the subject data communications line.

A further embodiment of the method of the present invention relates to a method for assessing a Quality of Service or Quality of Experience of a data communication according to claim 5, wherein said method further comprises the step of generating a Quality of Service classification summary of said classification for each time interval of said plurality of time intervals according to a certain weighting of each classification corresponding to a predefined formula; and obtaining a further classification of said Quality of Service or Quality of Experience by comparing said classification summary of said classifications to at least one second predefined threshold value.

An even more accurate Quality of Service or Quality of Experience of a data communication a classification summary is generated of said Quality of Service classification for each time interval of said plurality of time intervals according to a certain weighting of each classification corresponding to a predefined formula; and subsequently obtaining a further classification of the Quality of Service or Quality of Experience by comparing the classification summary of said classifications to at least one second predefined threshold value.

In other words, the classification of each value of the minimum error-free physical line throughput value, corresponding to a respective time interval of a plurality of time intervals is weighted with a factor depending on the assigned classification of the value corresponding to each respective time interval of a plurality of time intervals and subsequently the weighted values for each interval of the plurality of time intervals are combined in accordance with a certain formula, e.g. all weighted values for each interval of the plurality of time intervals are added. The weighted values for each interval of the plurality of time intervals combined in accordance with a certain formula together form the classification summary being a value representing indication for the quality of service of a data communications over a communications line. In turn the further classification of said Quality of Service or Quality of Experience is obtained by comparing said classification summary of said classifications to at least one second predefined threshold value.

Examples of a classification summary may be an absolute number of bit rate drop over the time, i.e. over the relevant day or as a ratio between the bad periods and the good ones or the total ones, or as a Mean-Time-Between-Drops, i.e. an average period of time from a first bit rate drop to a second bit rate drop.

Indeed, it gets possible to state about the Quality of Service by performing some simple ratio between the amount of periods presenting low minEFTR value (bad periods) is significant with respect to the amount of periods where the minEFTR is high (good periods). An even more precise computation would propose a computation of the Mean-Time Between Drops, i.e. an average time between 2 consecutive periods presenting low minEFTR. From these computations, predefined thresholds can be applied in order to state about a high MTBD (good QoS) or low MTBD (degraded QoS).

The at least one second predefined threshold value may be a value that represents a limit to which the end-user starts to be impacted. For example, having regularly drops of error-free throughput during a video session may result in regular visual artefacts (pixelization, lags, etc). If such phenomenon regularly occurs (i.e. average time between occurrence if such events is short), quality of experience of the end-user gets really impacted. By contrast, if this event occurs punctually, impact is lower. Purpose of this further classification threshold is to define a limit where this impact starts to be perceived as problematic. This at least one second predefined threshold value is usually defined in collaboration with operators.

Also, a daily Quality of service or Quality of experience metric, that summarizes this impact is proposed, that may be applied for physical data line troubleshooting and optimization.

Still a further embodiment of the method of the present invention relates to a method for assessing a Quality of Service of a data communication according to claim any of claims 1 to 5, wherein said method further comprises applying said Quality of service classification as an input for determining a dynamic line management action for improving said Quality of Service of a data communication over said data communications line.

The new metric, i.e. the Quality of service classification of the data communications line based on said minimum error-free physical line throughput can be used solely, but also in combination with the two "classical" MTBE and MTBR, to provide a more accurate view of the real Quality of Service as perceived by end users. Additionally, this metric can be used to drive more appropriate actions in a Dynamic Line Management systems when retransmission for correction of corrupted frames is applied.

Moreover the quality of Service classification as determined in accordance with claim 5 is also feasible to be applied as an input for the determination of the *Dynamic line management actions for improving the quality of the data* communication over said data communications line.

*Dynamic line management (DLM)* constantly assesses the performance of the line in order to provide information to the end user's DSL modem to allow it to choose a suitable sync rate with which to connect to the DSLAM, balancing speed against the risk of errors due to changing noise conditions. DLM is configured to make adjustments to the DSLAM output power, suggested target signal-to-noise-ratio (SNR) margin and *sync rate* and can choose to apply a technique known as interleaving which aids error correction etc.

Hence the Quality of service classification of the data communications line based line based on the minimum error-free physical line throughput may be used solely, but also in combination with the two "classical" MTBE and MTBR, as an input of such *Dynamic line management DLM that in turn determines based on the input the appropriate Dynamic line management action.*

Still a further embodiment of the method of the present invention relates to a method for assessing a Quality of Service of a data communication according to claim any of claim 6, wherein said method further comprises:

- applying said further classification of said Quality of service as an input for determining a dynamic line management action for improving said Quality of Service of a data communication over said data communications line.

The new metric, i.e. the further classification of said Quality of service n of the data communications line based on said minimum error-free physical line throughput can be used to provide a more accurate view of the real Quality of Service as perceived by end users. Additionally, this metric can be used to drive more appropriate actions in a Dynamic Line Management systems when retransmission for correction of corrupted frames is applied.

Moreover the further classification as determined in accordance with claim 6 is also feasible to be applied as an input for the determination of the *Dynamic line management actions for improving the quality* of *the* data communication over said data communications line.

*Dynamic line management (DLM)* constantly assesses the performance of the line in order to provide information to the end user's DSL modem to allow it to choose a suitable sync rate with which to connect to the DSLAM, balancing speed against the risk of errors due to changing noise conditions. DLM is configured to make adjustments to the DSLAM output power, suggested target signal-to-noise-ratio (SNR) margin and *sync rate* and can choose to apply a technique known as interleaving which aids error correction etc.

A further embodiment relates to a Monitoring device, configured to assess a Quality of Service of a data communication over a data communications line, said data communications line coupling a Network access Node and a customer premises equipment, said data communication being subject to the application of retransmission technology for correcting errors of said data communication, said Monitoring device, being configured to:

- collect, for said data communications line, physical error free throughput information; and
- estimate for said data communications line a minimum error-free physical line throughput; and
- generate a Quality of service classification of said data communications line based on said minimum error-free physical line throughput.

Still a further embodiment relates to a Monitoring device, according to claim 9, wherein said Monitoring device, further is configured to execute a method according to any of claims 2 to 8

Still a further embodiment relates to a Quality assessment station for assessing a Quality of Service of a data communication over a data communications line, said data communications line coupling a Network access Node and customer premises equipment, wherein said Quality assessment station comprises a Monitoring device, according to any of the claims 9 to 10.

A final embodiment relates to a Computer program product, preferably a computer readable storage medium, comprising a computer program that is programmed for executing a method according to any of claims 1 to 8 when run on a computer.

The effects and advantages of the apparatus and systems according to embodiments of the present invention are substantially the same, *mutatis mutandis,* as those of the corresponding methods according to embodiments of the present inventions.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. This means that there exists a path between an output of A and an input of B which may be a path including other devices or means.

BRIEF DESCRIPTION OF THE DRAWINGS

The above and other objects and features of the invention will become more apparent and the invention itself will be best understood by referring to the following description of an embodiment taken in conjunction with the accompanying drawings wherein:

Fig. 1 represents the functional structure of a system configured to assess a Quality of Service of a data communication over a data communications line, said data communications line coupling a Network access Node DSLAM and a customer premises equipment CPE; and

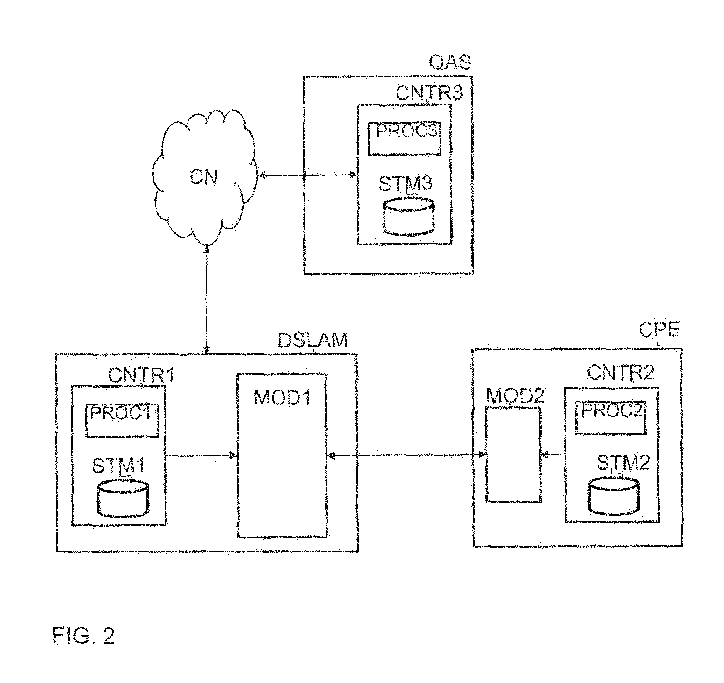

Fig. 2 represents a functional structure of the Network access Node DSLAM and the functional structure of customer premises equipment CPE and the functional structure of monitoring device; and

Fig.3 A, B representing a diagram wherein the Quality of Service classification is displayed; and

Fig. 4 represents a tree diagram according to which the QoS/QoE classifications, i.e. the Mean-Time-Between-Drops MTBD may be used as inputs by the DLM in order to improve the performance on lines that are resorting to the retransmission of corrupted frames.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

DESCRIPTION OF EMBODIMENTS

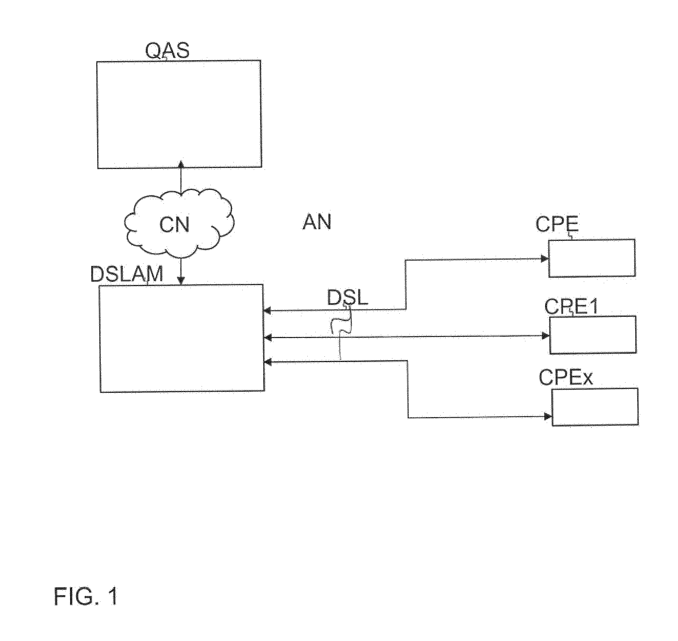

In the following paragraphs, referring to the drawing in FIG.1, an implementation of the system configured to assess a Quality of Service of a data communication over a data communications line, according to an embodiment of the present invention is described. In the first paragraph, the elements of the meant system in Fig. 1 are described, and in a further paragraph, all connections between mentioned elements are defined.

Subsequently, all relevant functional means of the mentioned Network access Node DSLAM and the functional structure of customer premises equipment CPE and the functional structure of monitoring device as presented in FIG.1 are described followed by a description of all interconnections.

In the succeeding paragraph the actual execution of the system is described.

A first essential element of the system is the network side termination node of the communications network DSL further referred to as access node DSLAM and a second end of the line DSL is connected to a terminal side termination node of the network. The terminal side termination node CPE may be part of customer premises equipment CPE, CPE1, CPEx of the network.

The communication network DSL may comprise telecommunication lines, at least one telecommunication line may have a pair of electrical conductors. A first end of the line is connected to a network side termination node DSLAM of the network, further referred to as access node DSLAM, and a second end of the line DSL is connected to a terminal side termination node of the network.

The terminal side termination node may be part of customer premises equipment CPE of the network.

In the shown embodiment, the telecommunication line DSL may be a Digital Subscriber Line DSL, such as VDSL2, ADSLx or the like. Consequently, the access node DSLAM may be a DSL Access Multiplexer DSLAM or another type of DSL access node. The terminal side termination node may be a DSL modem or include a DSL modem.

The access node DSLAM may have a first modem circuitry MOD1 to which the first end of the lines DSL is connected. In addition, the access node DSLAM has a first controller CNTR1 adapted for controlling the operation of the access node DSLAM. In an embodiment, the first controller CNTR1 is a programmable computer PROC1 comprising a processor, e. g. a microprocessor, and a storage element STM1, e.g. semiconductor memory.

The terminal side termination node may includes a second modem circuitry MOD2 to which the second end of the line DSL is connected. Furthermore, the terminal side termination node may comprise a second controller CNTR2. The second controller CNTR2 may have the same basic configuration as the first controller CNTR1, i.e. the second controller CNTR2 may be a programmable computer and comprise a processor PROC2 and/or a storage element STM2.

Furthermore, the network may comprise an optional Quality assessment station QAS connected e. g. via an interconnection network CN to at least one of the nodes DSLAM , CPE, CPE1 CPEx such that the station Quality assessment station QAS is configured to communicate with at least one of the nodes DSLAM , CPE, CPE1 CPEx, preferably the access node DSLAM. The station QAS comprises a third controller CNTR3. The third controller CNTR3 may have the same basic configuration as the first controller CNTR1, i.e. the third controller CNTR3 may be a programmable computer and comprise a processor PROC and/or a storage element STM. In an exemplary embodiment, the station QAS may be a server computer, a personal computer, a handheld computer such as a PDA or cell phone, etc.

The method for assessing a Quality of Service of a data communication over a data communications line DSL may be executed at the Quality assessment station QAS. To this end, a computer program may be stored in the storage element STM3 of the third controller CNTR3. The computer program is programmed for executing the method when run by the processor PROC3 of the third controller CNTR3. However, it is to be noted that the method alternatively may also be executed on a different network element of the network e. g. on the access node DSLAM and the program may be stored on the storage element STM2 of the second controller CNTR2.

In an embodiment of the method according to the present invention this method comprises the step of collecting physical line data, i.e. the physical error free throughput information. The physical line data may, besides the minimum error-free physical line throughput, additionally comprise any value describing a physical characteristic of the line such as rate of coding violations CV, a number of error seconds ES within a certain time interval, a number of several errored seconds SES, the total show time *showtime* during the time interval, a number *Resync* of spontaneous resynchronisations within the certain time interval and/or a number of failed initialisations *FI* of a certain line within the time interval. The physical line data may be retrieved from a network element - such as an access node DSLAM or the customer side termination node CPE - that is connected directly to a line DSL. Preferably, the method comprises collecting the physical line data CV, *ES, SES, showtime, Resync, FI* from at least one of multiple network elements DSLAM, CPE, CPE1, CPEx of the network.

The physical line data, such as the physical error free throughput information is collected on a regular basis, e.g. once in each time interval of 15 minutes. The same may be valid for the further mentioned parameters of the physical line data.

Subsequently, a minimum error-free physical line throughput is estimated for the data communications line where the estimating of the minimum error-free physical line throughput is based on a value of the minimum error-free physical line throughput for each 15 minutes time interval of a plurality of time intervals in a 24 hours time frame.

Based on the minimum error-free physical line throughput a Quality of service classification of said data communications line is generated.

This Quality of service classification is generated by comparing for each time interval of said plurality of time intervals, a minimum error-free physical line throughput value with at least one predefined threshold value; and wherein said classification of said data communications line comprises a plurality of classes.

The possible Quality of service, classification may be subdivided into a plurality states of the subject data communications line, e.g. GOOD or BAD, or GOOD, RISKY or BAD or a further alternative classification. This classification respectively refers to the plurality of classes consisting of only two classes, e.g. the class of stable lines and the class of unstable lines or alternatively if the plurality of stability classes corresponds to three classes: a class of stable lines, a class of risky lines and a class of unstable lines.

In case the minimum Error-Free Throughput observed over the entire previous day can be retrieved based on a single value each day only and compared to some pre-defined thresholds on a daily basis, this approach provides a view on the amplitude of the worst bitrate drop over the previous day. Although it offers an idea about the highest loss of bitrate, this method cannot track the frequency of occurrences of such losses. In other words, as it only provides a single value each day, no counting nor simple statistics on the number of occurrences can be performed.

Additionally it is to be noted that, depending on the type of service, i.e. High speed internet, IPTV etc and on the STB-buffer, the high and low Thresholds can be adapted. For instance, in the case of IPTV, highThreshold and lowThreshold can respectively be equal to 6 MBits/s and 3Mbits/s. For HSI only, 2 MBits/s and 512 kBits/s can be used, for instance. Meaning that for IPTV at least 6 MBits/s min error free throughput is required for a stable data transmission and that in case of a min error free throughput between 6 and 3 MBits/s, data transmission is assigned a Quality of Service classification RISKY meaning that the line stability/QoS is risky and is susceptible of improvement (QoS may results in some potential degradation events).

For High Speed internet these thresholds define some acceptable limit of throughput experience. Indeed, having too low throughput can result in congestion of TCP/IP packets and therefore degrades the quality of experience while surfing the web, experiencing video-over-the top sessions (youtube, Netflix, skype,...) or downloading files.

In order to overcome the inability to count or to perform some simple statistics on the frequency of occurrence and amplitudes of these bitrate drops, as only the worst case value has been used, instead of a single value of the minimum Error-Free Throughput observed, say every 15-minutes, a new minimum Error-Free Throughput value is made available and can be collected at the access node DSLAM.

Each value, corresponding to a time interval, of the minimum Error-Free Throughput observed, is compared with this lowThreshold and with the highThreshold. This allows proposing a view over time of the occurrence and severity of the loss of Error-Free Throughput.

This is formalized as follows:

- If minEFTR in a certain time interval is bigger than the highThreshold value, the time interval is assigned a Quality of Service classification GOOD meaning that the line is stable (meaning the QoS is also good and stable);
- In case of minEFTR in a certain time interval is smaller than the highThreshold value, but at the same time bigger than the lowThreshold value, the time interval is assigned a Quality of Service classification RISKY meaning that the line stability or QoS is risky and is susceptible of improvement (QoS may result in some potential degradation events, e.g. in the context of IPTV, it can results in some image lags and/or visual artefacts).
- If minEFTR in a certain time interval is smaller than the lowThreshold value, the time interval is assigned a Quality of Service classification BAD meaning that the line is unstable and is susceptible of improvement (this means as well that the QoS is degraded).

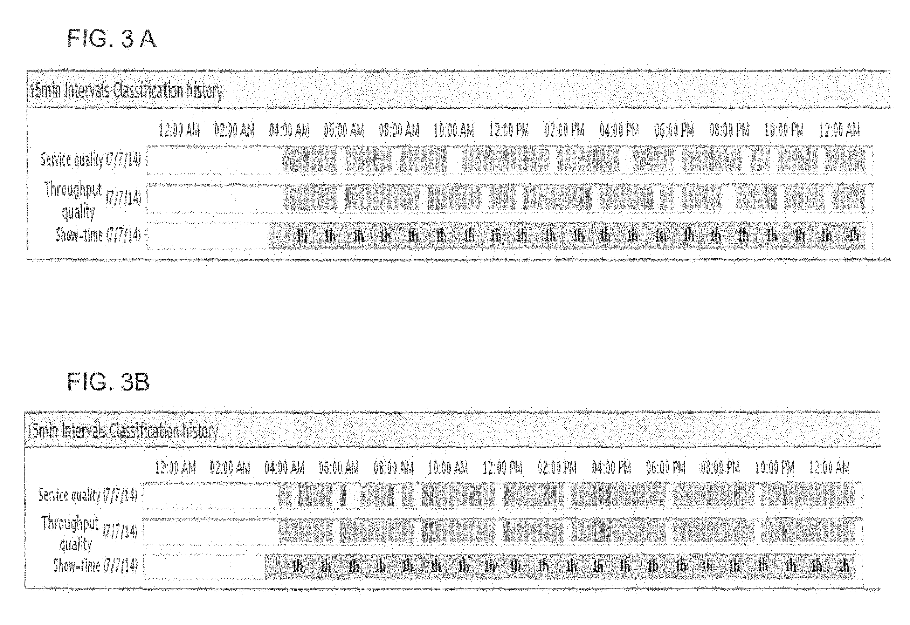

Moreover, the Quality of Service classification may be presented in a diagram as shown in FIG 3. Direct application of one of the proposed metrics for the loss of EFTR quantification is to propose a view on the "throughput quality" indicator, see FIG. 3A, not directly correlated to the service quality indicator) or together with the MTBE and MTBR in order to report a global Quality of Service or quality of Experience (service quality) extended to G.INP (FIG. 3B the service quality also makes use of the throughput quality information).

This information, here presented through time, can be aggregated in a daily metric in order to summarize the Quality of Service or quality of Experience over the day to feed it to the Dynamic Line management DLM that is performed by any of the first controller CNTR1, second controller CNTR2 or the third controller CNTR3.

In a further embodiment, the method of the present invention further comprises, generating said Quality of Service classification of said data communications line additionally based on additional physical data communications line parameters such as MTBE, MTBR. The generating of the Quality of service classification or alternatively a Quality of Experience classification of the data communications line additionally, i.e. in addition to the classification based on the minimum error-free physical line throughput, may be based on additional physical data communications line parameters such as for example the *Mean Time Between Errors* MTBE and/or *Mean Time Between Resynchronizations* MTBR values.

The improved metric, i.e. minimum error-free physical line throughput can be applied in combination with the MTBE and MTBR to provide a more accurate view of the real Quality of Service as perceived by end users. Moreover, this metric can be applied to control more appropriate actions in Dynamic Line Management system for applied for physical data line troubleshooting, line stabilization and bitrate or QoS optimization of the physical layer transmission, especially if retransmission applications for error correction in case of corrupted frames or cells is applied.

To achieve this metric computation, furthermore, another embodiment of the present invention a method for assessing a Quality of Service of a data communication additionally comprises generating a classification summary of said classification for each time interval of said plurality of time intervals according to a certain weighting of each classification corresponding to a predefined formula and subsequently obtaining a further classification of said Quality of Service by comparing said classification summary of said classifications to at least one second predefined threshold value.

In this manner an extra decision, first generating a classification summary by summarizing and classifying the G.INP Quality of Service on a daily basis is proposed. Different method in order to handle this can be imagined, for instance as an absolute number:

The amount of these error-free throughput EFTR drops on a daily basis is summarized by summing the number of time-intervals being classified as "BAD" and the number of time-intervals being classified as "RISKY" divided by two:

$$\text{Amount(day)} = \text{Nbr(BAD(15min))} + 1/2 * \text{RISKY(15min))};$$

Hence, if the amount of these error-free throughput EFTR drops on a daily basis is too high, there is too much disturbance on the line to have a satisfactory Quality of Service and a Quality of Experience.

Further, the resulting classification summary comprising the amount of these error-free throughput EFTR drops on a daily basis is compared to a low threshold value.

In case the resulting classification summary comprising the amount of these error-free throughput EFTR drops on a daily basis, the amount of these error-free throughput EFTR drops is smaller than the threshold value. The resulting classification summary is assigned the value "GOOD" meaning that the communications line is sufficiently stable (QoS is GOOD as well).

If the resulting classification summary comprising the amount of these error-free throughput EFTR drops on a daily basis, the amount of these error-free throughput EFTR drops is higher than the low threshold value and the amount of these error-free throughput EFTR drops is smaller than a high threshold value, the resulting classification summary is assigned the value "RISKY" meaning that the communications line is not sufficiently stable, i.e. line stability or QoS is risky and is susceptible of improvement.

In case the resulting classification summary comprising the amount of these error-free throughput EFTR drops on a daily basis, the amount of these error-free throughput EFTR drops is bigger than the high threshold value. The resulting classification summary is assigned the value "BAD" meaning that the communications line is insufficiently stable or in other words QoS requirements are not met.

Alternatively, such classification summary can be derived by applying the ratio between the "BAD" classified time intervals and the "GOOD" classified time intervals or the total number of time intervals.

Hence if the ratio between the "BAD" classified time intervals and the "GOOD" classified time intervals or the total number of time interval is too high, there is too much disturbance on the line to have a satisfactory Quality of Service and a Quality of Experience the data communications line is to be classified as unstable. In case the ratio between the "BAD" classified time intervals and the "GOOD" classified time intervals or the total number of time intervals on a daily basis is relatively low, the data communications line is to be classified as stable..

$$\text{Ratio(day)} = \text{Nbr(BAD(15min))} + 1/2 * \text{RISKY(15min))} / \text{Nbr(GOOD(15min))};$$

$$\text{(optional)} \quad \text{Ratio(day)} =$$

$$\text{Nbr(BAD(15min))} + 1/2 * \text{RISKY(15min))} / \text{Nbr(ALL(15min))};$$

In case the resulting classification summary comprising the "ratio" is smaller than the threshold value. The resulting classification summary is assigned the value "GOOD" meaning that the communications line is sufficiently stable or the QoS is GOOD.

If the resulting classification summary comprising the "RATIO is higher than the low threshold value and the amount of this "RATIO" is smaller than a high threshold value, the resulting classification summary is assigned the value "RISKY" meaning that the communications line is not sufficiently stable, i.e. line stability/QoS is risky and is susceptible of improvement.

In case the resulting classification summary comprising the "RATIO" is bigger than the high threshold value. The resulting classification summary is assigned the value "BAD" meaning that the communications line is insufficiently stable or in other words QoS does not match the minimal requirements in terms of throughput.

Still an alternative classification summary may be derived by applying the ratio between the Mean-Time-Between-Drops MTBD.

The Mean-Time-Between-Drops MTBD, i.e. the average time between two error-free throughput EFTR drops is determined by dividing the number of time intervals of showtime by the sum of the number of time intervals being classified as "BAD" and the number of time-intervals being classified as "RISKY" divided by two:

$$MTBD(day) =$$

$$Amount(showtime(15min))/(Nbr(BAD(15min)+1/2*RISKY(15min));$$

Hence, if the Mean-Time-Between-Drops MTBD, i.e. the time between two error-free throughput EFTR drops on a daily basis is too short there is too much disturbance on the line to have a satisfactory Quality of Service and a Quality of Experience, the data communications line is to be classified as unstable. In case the Mean-Time-Between-Drops MTBD, i.e. the time between two error-free throughput EFTR drops on a daily basis is relatively long the data communications line is to be classified as stable.

Further, the resulting classification summary comprising the amount of these Mean-Time-Between-Drops MTBD on a daily basis is compared to a low threshold value and a high threshold value.

In case the resulting classification summary comprising the amount of Mean-Time-Between-Drops MTBD is smaller than the threshold value. The resulting classification summary is assigned the value "BAD" meaning that the communications line is insufficiently stable. The communications line or the QoS is insufficiently stable as the time between two drops is considered too short.

If the resulting classification summary comprising the amount Mean-Time-Between-Drops on a daily basis, is higher than the low threshold value and the amount of Mean-Time-Between-Drops is smaller than a high threshold value, the resulting classification summary is assigned the value "RISKY" meaning that the communications line is not sufficiently stable, i.e. line stability or QoS is risky and is susceptible of improvement.

In case the resulting classification summary comprising the amount of Mean-Time-Between-Drops is bigger than the high threshold value.

The resulting classification summary is assigned the value "GOOD" meaning that the communications line or in other words, the QoS is sufficiently stable as the time between two drops is considered sufficiently long.

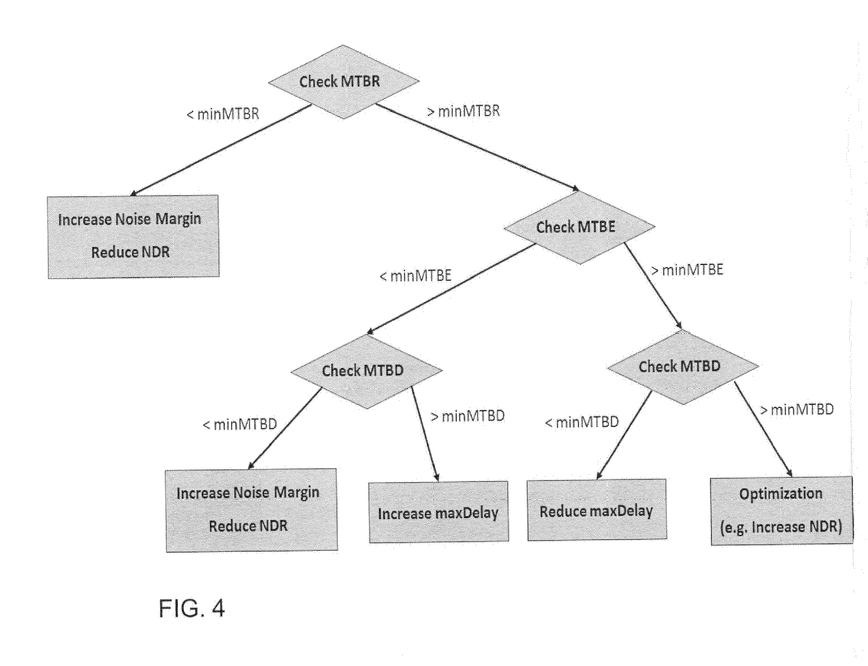

Furthermore, in addition to assessment and associated classification aspects of having a metric able to quantify the transient loss of error-free throughput, useful for reporting, diagnosis and troubleshooting, the new metric, i.e the the Mean-Time-Between-Drops MTBD may be applied to improve DLM performance on lines that are resorting to RTX as is depicted in Fig. 4.

Alternatively also, other QoS estimators, based or not on the same or different line paremeters, may be applied for improving the line performances by means of a DLM system, for instance, in the context of RTX in the same manner as described for the Mean-Time-Between-Drops MTBD classification.

With the current implementation, a Dynamic Line Management system checks operations on lines without RTX enabled are as follows:

When performing Dynamic Line Management actions on lines resorting to error correction by Retransmission technology RTX, operations should be different:

In case of a low Mean Time Between Resynchronization MTBR value, the correction Action for improving Dynamic Line Management performance is basically the same as without RTX: increase noise margins by reducing the Net Data Rate NDR.

Subsequently, the Mean Time Between Error MTBE is checked; in case of a low Mean Time Between Error MTBE value, the Mean Time Between Error MTBE computation should take account of coding Violations CV only. Because including the parameter Severely Errored seconds SES, EFTR drops are counted as an error event as well. The purpose here would be that the MTBE reflects only the transmission errors that couldn't be corrected (by retransmission). So the measure for improving DLM performance would be to increase the INP level (for instance by increasing the maximum delay allowed for retransmissions). However, this action is only to be taken if the MTBD is correct. Indeed, in case there are already a lot of EFTR drops because of too many retransmissions, allowing more retransmission will deteriorate the situation.

If the Mean time Between Drop MTBD value is also too low, an action taken by the DLM in order to improve the line performance in terms of Quality of Service consists in increasing the noise margins by reducing the NDR.

In case of a low Mean time Between Drop MTBD value, too many impacting bitrate drops), reducing the delay allowed for retransmission might solve the problem, but the number of transmission errors left may then increase, hence degrading the MTBE.

If the Mean Time Between Error MTBE becomes unacceptable, then the solution would be to increase the noise margins by reducing the NDR.

A simple illustration of how Dynamic Line Management with the associated Dynamic Line management actions over RTX lines should work is depicted in **Figure 4.**

**The** Dynamic Line management DLM action may be performed by any of the first controller CNTR1, second controller CNTR2 or the third controller CNTR3.

As already mentioned, this process assumes that the MTBE only considers CV (not ES and SES). Also, the drops included in the MTBD computation may only be taken into account if their amplitude is larger than a predefined threshold.

This method also assumes that, like most DLM systems, this decision tree is applied every day, and all configurations that have already been tried are kept in a memory, I order to avoid trying twice a configuration that doesn't work. Otherwise, the process may not converge.

When both MTBR, MTBE and MTBD are above their respective minimum value required, an optimization process could be started, trying, for instance to increase the bitrate on the line or to reduce the consumed power. This process is not presented here as it is out of the scope of the present invention.

This process would ensure that each line is always pushed to the limit of what it can offer in terms of bitrate and stability.

In practice, these proposed optimization actions are implemented and applied on the line by directly changing the configured parameters in the DSLAM. Therefore, the line should benefits from an optimized QoS amongst others by being driven with adapted Net Data Rate and adapted maxDelay.

Of course, several variants and refinements of this simplified method are possible.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

**Claims**

1. A method for assessing a Quality of Service of a data communication over a data communications line, said data communications line coupling a Network access Node (DSLAM) and a customer premises equipment (CPE), said method including the application of retransmission technology for correcting errors of said data communication, said method comprising the steps of:

   - collecting, for said data communications line, physical error free throughput information; and
   - estimating for said data communications line a minimum error-free physical line throughput; and
   - generating a Quality of Service classification of said data communications line based on said minimum error-free physical line throughput.

2. A method for assessing a Quality of Service of a data communication according to claim 1, wherein said method further comprises:

   - generating said Quality of service classification of said data communications line additionally based on additional physical data communications line parameters.

3. A method for assessing a Quality of Service of a data communication according to any of claims 1 or 2, wherein said step of estimating said minimum error-free physical line throughput is based on a single value of said minimum error-free physical line throughput in a 24 hours time frame.

4. A method for assessing a Quality of Service of a data communication according to any of claims 1 or 2, wherein said step of estimating said minimum error-free physical line throughput is based on a value of said minimum error-free physical line throughput for each interval of a plurality of time intervals in a 24 hours time frame.

5. A method for assessing a Quality of Service of a data communication according to claim 4, wherein said Quality of Service classification of said data communications line is generated by comparing for each said time interval of said plurality of time intervals, a minimum error-free physical line throughput value with at least one predefined threshold value; and assigning based on said comparing a class to each said interval wherein said classification of said data communications line comprises a plurality of classes.

6. A method for assessing a Quality of Service of a data communication according to claim 5, wherein said method further comprises the step of:

   - generating a classification summary of said Quality of Service classification for each time interval of said plurality of time intervals according to a certain weighting of each classification corresponding to a predefined formula; and
   - obtaining a further classification of said Quality of Service by comparing said classification summary of said classifications to at least one second predefined threshold value.

7. A method for assessing a Quality of Service of a data communication according to claim any of claims 1 to 5, wherein said method further comprises:

   - applying said Quality of service classification as an input for determining a dynamic line management action for improving said Quality of Service of a data communication over said data communications line.

8. A method for assessing a Quality of Service of a data communication according to claim any of claim 6, wherein said method further comprises:

   - applying said further classification of said Quality of service as an input for determining a dynamic line management action for improving said Quality of Service of a data communication over said data communications line.

9. Monitoring device (CNTR1, CNTR2, CNTR3), configured to assess a Quality of Service of a data communication over a data communications line, said data communications line coupling a Network access Node (DSLAM) and a customer premises equipment (CPE), said data communication being subject to the application of retransmission technology for correcting errors of said data communication, said Monitoring device (CNTR1, CNTR2, CNTR3), being configured to:

   - collect, for said data communications line, physical error free throughput information; and
   - estimate for said data communications line a minimum error-free physical line throughput; and
   - generate a Quality of service classification of said data communications line based on said minimum error-free physical line throughput.

10. Monitoring device (CNTR1, CNTR2, CNTR3), according to claim 9, wherein said Monitoring device (CNTR1, CNTR2, CNTR3), further is configured to execute a method according to any of claims 2 to 8

11. Quality assessment station (QAS) for assessing a Quality of Service of a data communication over a data communications line, said data communications line coupling a Network access Node (DSLAM) and a customer premises equipment (CPE), wherein said Quality assessment station (QAS) comprises a Monitoring device (CNTR1, CNTR2, CNTR3), according to any of the claims 9 to 10.

12. Computer program product, preferably a computer readable storage medium (STM), comprising a computer program that is programmed for executing a method according to any of claims 1 to 8 when run on a computer (PROC1, PROC2, PROC3).

FIG. 1

FIG. 2

## FIG. 3 A

**15min Intervals Classification history**

| | 12:00 AM | 02:00 AM | 04:00 AM | 06:00 AM | 08:00 AM | 10:00 AM | 12:00 PM | 02:00 PM | 04:00 PM | 06:00 PM | 08:00 PM | 10:00 PM | 12:00 AM |

Service quality (7/7/14)

Throughput quality (7/7/14)

Show-time (7/7/14)  1h 1h 1h 1h 1h 1h 1h 1h 1h 1h 1h 1h 1h 1h 1h 1h 1h 1h 1h 1h 1h

## FIG. 3B

**15min Intervals Classification history**

| | 12:00 AM | 02:00 AM | 04:00 AM | 06:00 AM | 08:00 AM | 10:00 AM | 12:00 PM | 02:00 PM | 04:00 PM | 06:00 PM | 08:00 PM | 10:00 PM | 12:00 AM |

Service quality (7/7/14)

Throughput quality (7/7/14)

Show-time (7/7/14)  1h 1h 1h 1h 1h 1h 1h 1h 1h 1h 1h 1h 1h 1h 1h 1h 1h 1h 1h 1h 1h

Check MTBR

< minMTBR

> minMTBR

Increase Noise Margin

Reduce NDR

Check MTBE

< minMTBE

> minMTBE

Check MTBD

Check MTBD

< minMTBD

> minMTBD

< minMTBD

> minMTBD

Increase Noise Margin

Reduce NDR

Increase maxDelay

Reduce maxDelay

Optimization

(e.g. Increase NDR)

FIG. 4

Europäisches
Patentamt

European
Patent Office

Office européen
des brevets

## EUROPEAN SEARCH REPORT

Application Number

EP 14 30 6855

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2007/124727 A1 (TENNYSON GARY [US] ET AL) 31 May 2007 (2007-05-31) <br> * paragraph [0006] - paragraph [0006] * <br> * paragraph [0021] - paragraph [0021]; claim 1; figures 1,2 * <br> * paragraph [0042] - paragraph [0042]; claim 4 * <br> * paragraph [0031] - paragraph [0031]; figure 2 * <br> ----- | 1-5,7, 9-12 | INV. <br> H04L12/24 <br> H04L12/26 |
| Y | "TR-197- DQS: DSL Quality Management Techniques and Nomenclature", <br> , <br> 22 August 2012 (2012-08-22), pages 1-61, XP055175052, <br> Retrieved from the Internet: <br> URL:http://www.broadband-forum.org/technical/download/TR-197.pdf <br> [retrieved on 2015-03-10] <br> * page 20 - page 20 * <br> * page 36 - page 37 * <br> * page 38 - page 39 * <br> ----- | 1-5,7, 9-12 | |
| A | "ITU-T Improved impulse noise protection for DSL transceivers", <br> , <br> 21 April 2011 (2011-04-21), pages 1-78, XP055175260, <br> Retrieved from the Internet: <br> URL:https://www.itu.int/rec/T-REC-G.998.4-201006-S/en <br> [retrieved on 2015-03-10] <br> * page 31 - page 34 * <br> ----- | 1-12 | TECHNICAL FIELDS SEARCHED (IPC) <br><br> H04L |

The present search report has been drawn up for all claims

| Place of search | Date of completion of the search | Examiner |
|---|---|---|
| The Hague | 18 March 2015 | D'Alessandro, S |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT**

**ON EUROPEAN PATENT APPLICATION NO.**   EP 14 30 6855

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2015

| Patent document cited in search report | Publication date | Patent family member(s) | Publication date |
|---|---|---|---|
| US 2007124727 A1 | 31-05-2007 | NONE | |

EPO FORM P0459

For more details about this annex : see Official Journal of the European Patent Office, No. 12/82